# EUROPÄISCHE PATENTANMELDUNG

(11) **EP 0 904 686 A1**
(43) Veröffentlichungstag der Anmeldung: **31.03.1999**
(21) Anmeldenummer: 98117514.4
(22) Anmeldetag: 15.09.1998
(51) Int. Cl.: A01F 29/20

(54) **Häckselmesser**

(30) Priorität: 27.09.1997 DE 19742770
(71) Anmelder: Deere & Company, Moline, Illinois 61265-8098 (US)
(72) Erfinder: Spiegelmacher, K. Prof.Dr.-Ing., 67655 Kaiserslautern (DE)
(74) Vertreter: Magin, Ludwig Bernhard

(57) **Zusammenfassung**

Häckselmesser (16) herkömmlicher Art sind plattenförmig ausgebildet und auf Messerböcken einer Häckseltrommel aufgenommen, wobei eine Schneide (22) nach vorne über den jeweiligen Messerbock übersteht. Der Betrieb einer Häckseltrommel mit derartigen Häckselmessern (16) führt zu einem nicht unerheblichen Kraftbedarf.

Es wird ein Häckselmesser (16) vorgeschlagen, das an seiner Rückseite im Bereich der Schneide (22) Ausnehmungen (28) aufweist, die nach dem Schleifvorgang zu einer wellenförmigen Schneidkante (30) führen. Eine derartige Schneidkante (30) führt zu einem geringeren Kraftbedarf und weist einen Selbstschärfeffekt auf.

Derartige Häckselmesser (16) werden in landwirtschaftlich nutzbaren Feldhäckslern verwendet.

## Beschreibung

Die Erfindung betrifft ein Häckselmesser mit einer eine Schneide tragenden Vorderseite und einer Rückseite.

Die DE-C2-27 37 683 offenbart eine Häckseltrommel mit einer Vielzahl in Reihen angeordneter Messerböcke, die jeweils ein im wesentlichen plattenförmiges Häckselmesser tragen. Jedes dieser Häckselmesser läuft an der vorlaufenden Kante in einer Schneide aus, während der rückwärtige Bereich der Befestigung auf dem Messerbock dient, wozu Längsschlitze und Schrauben vorgesehen sind. Die Häckselmesser dieser Häckseltrommel werden geschliffen, indem bei drehender Häckseltrommel ein Schleifstein über die Schneide geführt wird.

Das der Erfindung zugrunde liegende Problem wird in dem Kraftbedarf beim Betrieb der Häckselmesser gesehen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ergibt sich an der Schneide keine gerade Schneidkante, sondern eine gekrümmte, so daß es größtenteils zu einem ziehenden Schnitt kommt, der zu einem geringeren Kraftbedarf führt. Ferner führt diese Formgebung zu einem gewissen Selbstschärfeffekt, der eine längere Standzeit sowohl bei dem Häckselmesser als auch bei dem Schleifstein führt. Die sich ergebenden Zacken des dann brotmesserartig ausgebildeten Häckselmessers bewirken bei einer höheren lokalen Flächenpressung am Schneidgut einen Ausschneideeffekt, der die völlige Durchtrennung erleichtert. Die brotschneidemesserartige Ausbildung der Häckselmesser führt zu einer Schneidkraftverringerung, weil an der Schneide Freiräume entstehen und somit die Messerquerschnittsfläche verringert wird. Dies führt dazu, daß weniger "Messermaterial" durch das zu schneidende Gut hindurchbewegt werden muß, was sich kräftemindernd auswirkt.

Wenn die Ausnehmungen aneinander liegen und somit ineinander übergehen, bleiben zwischen ihnen keine nennenswerten Stege, die ein anderes Verschleißbild zeigen, als die Bereiche der Ausnehmungen mit weniger Material.

Auch beim Nachschleifen bleibt der Verlauf der Schneidkante stets derselbe, wenn sich die Ausnehmungen über den insgesamt möglichen Nachschleifbereich des Häckselmessers erstrecken.

Gute Schneidergebnisse und geringer Kraftbedarf werden erzielt, wenn die Schneide unter einem Winkel von 30 bis 50 Grad verläuft und die Ausnehmungen zwischen 5 und 20 mm breit sind. Bei diesen Abmessungen ergibt sich ein guter Schnittwinkel, wobei die Fertigungskosten vertretbar bleiben. Ein Winkel von 39 Grad erweist sich als besonders vorteilhaft.

Um einerseits einen ziehenden Schnitt zu erreichen, andererseits aber die Tiefe der Täler nicht zu groß werden zu lassen, ist es sinnvoll, den Querschnitt der Ausnehmungen rund zu gestalten, wobei allerdings nur ein Kreissegment entsteht. Als Radius werden 6 bis 14 mm empfohlen.

Ein Häckselmesser, dessen Schneide gegenüber dem Befestigungsbereich abgekröpft ist, ist besonders für den Einsatz in Mais geeignet.

In einfacher Weise kann das Häckselmesser auf Messerböcken oder sonstwie geformten Trägern befestigt werden, wenn in dem der Schneide gegenüberliegenden Befestigungsbereich Aussparungen zur Aufnahme von Halteelementen vorgesehen sind. Diese Aussparungen können als Langloch wie auch als Rund- oder Ovalloch ausgebildet sein und nehmen vorwiegend Schrauben auf, die mit ihrem Schraubenkopf das Messer festklemmen.

Wenn die Ausnehmungen mehr als die Hälfte der Erstreckung der Schneide quer zur Schneidrichtung einnehmen, z. B. 75 % und bis zu 90 % oder 95 %, wird eine hervorragende Verringerung des Kraftbedarfs gegenüber herkömmlichen Häckselmessern erreicht.

Je nach dem zu schneidenden Gut können Häckselmesser angewendet werden, deren Schneidkante im rechten Winkel zu der Schneidrichtung oder geneigt zu der Senkrechten verlaufen, d. h. die parallel oder geneigt zu der Drehachse der Häckseltrommel auslaufen. Mit schräg auslaufenden Häckselmessern kann das Gut seitlich geführt werden und es ergibt sich ein zusätzlicher ziehender Schnitt.

In der Zeichnung sind zwei nachfolgend näher beschriebene Ausführungsbeispiele der Erfindung dargestellt. Es zeigt:
- Fig. 1: eine Häckseltrommel mit erfindungsgemäßen Häckselmessern in Seitenansicht,
- Fig. 2a: ein Häckselmesser mit Ausnehmungen auf der Rückseite einer geraden Schneide in Draufsicht,
- Fig. 2b: das Häckselmesser aus Figur 2a in Seitenansicht,
- Fig. 2c: das Häckselmesser aus Figur 2a in Vorderansicht,
- Fig. 3a: ein Häckselmesser mit Ausnehmungen auf der Rückseite einer abgekröpften Schneide,
- Fig. 3b: das Häckselmesser aus Figur 3a in Seitenansicht vor der Kröpfung der Schneide,
- Fig. 3c: das Häckselmesser aus Figur 3a in Seitenansicht nach der Kröpfung der Schneide und
- Fig. 3d: das Häckselmesser aus Figur 3a in Vorderan sicht.

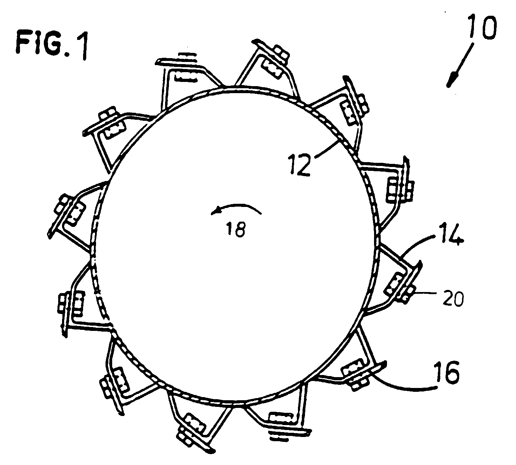

Eine in Figur 1 gezeigte Häckseltrommel 10 weist einen Trommelkörper 12, Messerböcke 14 und erfindungsgemäße Häckselmesser 16 auf.

Die Häckseltrommel 10 findet z. B. in einem nicht gezeigten landwirtschaftlichen Feldhäcksler Anwendung, der Mais, Gras oder andere Erntegüter erntet und mit dieser Häckseltrommel 10 in Verbindung mit einer nicht gezeigten Gegenschneide zerkleinert. Ein Pfeil 18 gibt die Drehrichtung der Häckseltrommel 10 während des Häckselvorgangs an.

Der Trommelkörper 12 bildet eine geschlossene Trommel von rundem Querschnitt, an deren Stirnseiten nicht gezeigte Stummelwellen angebracht sind, mit denen der Trommelkörper 12 drehbar gelagert wird. Allerdings kann auch jede andere Bauart eines Trommelkörpers 12 verwendet werden, d. h. auch Trommelkörper 12 mit radial verlaufenden Stegen oder Platten, über die die Häckselmesser gespannt sind - eine sogenannte offene Bauweise.

Die Messerböcke 14 sind aus Profilstahl gebildet und weisen einen Schenkel auf, der der Aufnahme des Häckselmessers 16 dient und sich jedenfalls im wesentlichen tangential von dem Trommelkörper 12 forterstreckt. Die Messerböcke 14 sind auf die Außenseite des Trommelkörpers 12 aufgeschweißt und zwar gleichmäßig und in mehreren Ringreihen verteilt. Wenn die Häckseltrommel 10 in offener Bauweise ausgeführt ist, sind keine Messerböcke 14 sondern bekannte Halterungen für die Häckselmesser 16 vorgesehen.

Die Häckselmesser 16 sind mit mehreren Halteelementen 20 in der Form von Schrauben auf den Messerböcken 14 befestigt und können auf diesen bewegt werden, um beim Auftreffen auf Fremdkörper ausweichen und bei Verschleiß nachgestellt werden zu können.

Bei den Häckselmessern 16 des Ausführungsbeispiels handelt es sich um solche, die sich nur über einen Teil der Breite der Häckseltrommel 10 erstrecken und die schneidenseitig in einer Linie enden, die parallel zu der Drehachse der Häckseltrommel 10 verläuft. Auf diese Art von Häckselmesser 16 ist die Erfindung allerdings nicht beschränkt. Vielmehr ist die Erfindung auch anwendbar bei Häckselmessern, wie sie in der DE-A-44 18 697 beschrieben sind, deren Offenbarung hiermit ausdrücklich einbezogen wird, also solchen, die sich nur über einen Teil der Breite der Häckseltrommel 10 erstrecken und im vorderen Bereich derart gebildet und abgekröpft sind, daß sie schneidenseitig schräg zu der Drehachse verläuft. Außerdem können auch solche Häckselmesser erfinderisch ausgestaltet werden, die sich über die gesamte, halbe oder einen sonstigen Anteil der Breite der Häckseltrommel 10 erstrecken, und zwar sowohl parallel zu der Drehachse als auch zu dieser geneigt, wobei sie dann auch in sich gedreht sind.

Die Häckseltrommel 10 ist in dem bisher beschriebenen Umfang z. B. aus der DE-C2-27 37 683 bekannt, deren Offenbarungsgehalt hiermit ausdrücklich mit einbezogen wird.

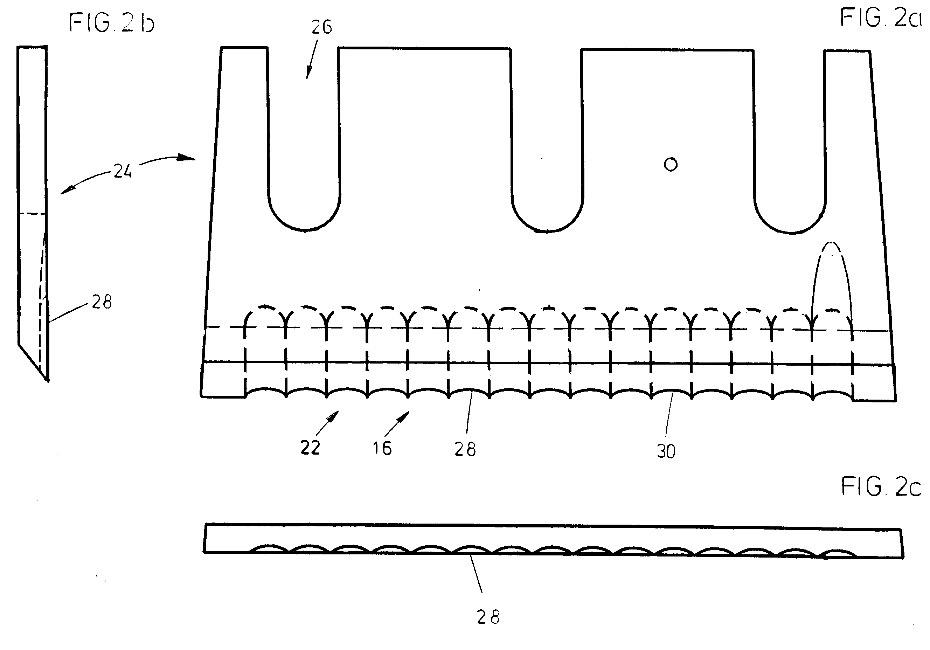

Die erfindungsgemäßen Häckselmesser 16 sind in Verbindung mit den Figuren 2a bis 3d im Detail beschrieben.

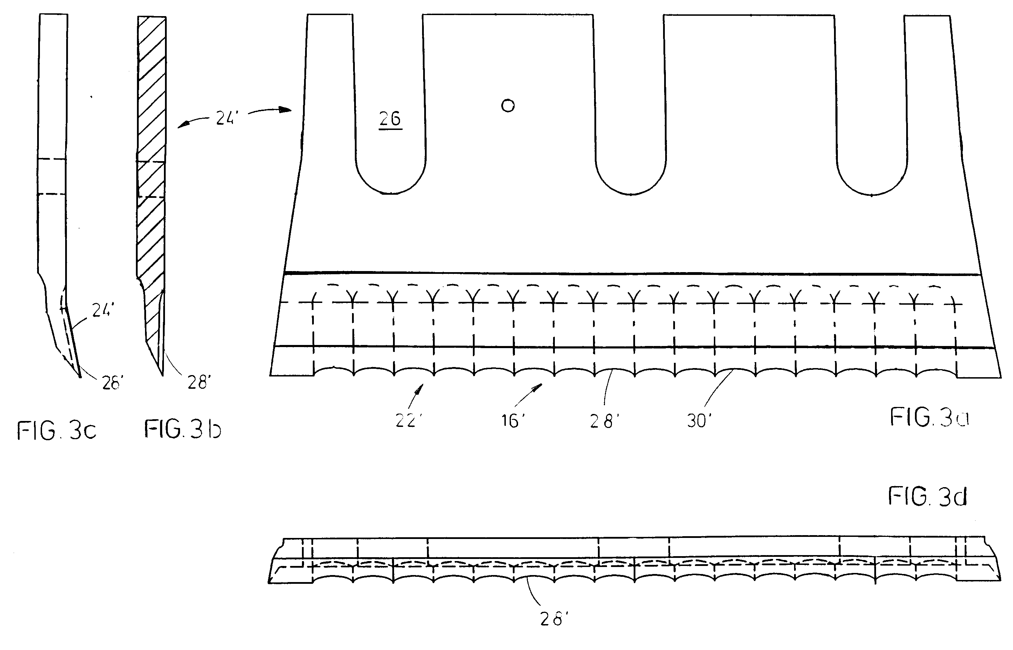

Die Häckselmesser 16 und 16' nach den Figuren 2a und 3a unterscheiden sich im wesentlichen lediglich in der Form ihrer Schneide 22 bzw. 22'. Während die Schneide 22 des Messers 16 auf ihrer Rückseite in einer Ebene mit der Rückseite des Häckselmessers 16' in einem Befestigungsbereich 24 verläuft - sh. Figur 2b - ist die Schneide 22' des Messers 16' nach Figur 3c gegenüber der Ebene des Befestigungsbereichs 24' abgekröpft - sh. Figur 3c -. Unter der Rückseite wird jeweils die dem Trommelkörper 12 zu gelegene Seite des Häckselmessers 16 verstanden.

Beiden Häckselmessern 16, 16' ist gemeinsam, daß sie im wesentlichen trapezförmig ausgebildet sind, wobei sich die Schneide 22, 22' jeweils zu dem breiteren Ende und der Befestigungsbereich 24 zu dem schmäleren Ende erstreckt. Jedes Häckselmesser 16, 16' ist aus einer ca. 7 mm starken Stahlplatte geschmiedet und im wesentlichen eben.

Von der schmalen Seite des Befestigungsbereichs 24 ausgehend erstrecken sich jeweils drei Aussparungen 26 zu der Schneide 22, 22' hin. Die Aussparungen 26 sind als Längsschlitze ausgebildet, deren Längsachsen parallel zueinander und senkrecht zu den langen Endkanten verlaufen. Die Aussparungen 26 erstrecken sich ungefähr über die Hälfte der Tiefe des Häckselmessers 16, 16', d. h. des Abstandes zwischen der der Schneide 22, 22' und der dem Befestigungsbereich 24 gehörenden Endkante.

Die Schneide 22, 22' verläuft unter einem Winkel von 35 bis 45 - vorzugsweise 39 - Grad.

Soweit die Häckselmesser 16, 16' bisher beschrieben wurden, entsprechen sie denen aus der DE-C2-27 37 683, die zudem auf dem Markt erhältlich sind.

Die erfindungsgemäßen Häckselmesser 16, 16' unterscheiden sich von den bekannten Häckselmessern durch Ausnehmungen 28 bzw. 28', die an der Rück- oder Unterseite der Häckselmesser 16, 16' im Bereich der Schneide 22, 22' eingearbeitet sind und sich zu einer Schneidkante 30 erstrecken.

Die Ausnehmungen 28, 28' sind dicht nebeneinander angeordnet und erstrecken sich über nahezu die gesamte Länge der Schneide 22, 22' - in den Ausführungsbeispielen über nahezu 90 % mittels fünfzehn Ausnehmungen. Jede Ausnehmung 28, 28' ist in diesem Ausführungsbeispiel ca. 10 mm breit und im Querschnitt rund mit einem Radius von ca. 8 mm ausgebildet, wobei der Querschnitt allerdings nur ein Kreissegment einnimmt.

Während die Schneide 22, 22' unter einem Winkel von ca. 35 - 45 Grad verläuft, erstrecken sich die Ausnehmungen 28, 28' parallel zu der wesentlichen Ebene der Häckselmesser 16, 16'.

Die Länge der Ausnehmungen 28, 28' entspricht ungefähr dem halben Abstand zwischen der Schneidkante 30 der Schneide 22, 22' und dem inneren Ende der Aussparungen 26. Jedenfalls ist die Erstreckung der Ausnehmungen 28, 28' größer als die projizierte Fläche der Schneide 22, 22'. Allerdings können sich die Ausnehmungen 28, 28' auch bis zu den Aussparungen 26 oder fast zu diesen erstrecken.

Die Ausnehmungen 28, 28' werden mittels spanender Formgebung, z. B. durch Fräsen, eingearbeitet. Nach einem anderen Verfahren werden die Ausnehmungen 28, 28' in das Häckselmesser 16, 16' eingeschmiedet oder eingewalzt, was zu einer erhöhten Festigkeit in dem Bereich der Schneide 22, 22' führt.

Bei der Ausführungsform nach den Figuren 3a bis 3d werden die Ausnehmungen in das Häckselmesser 16' eingearbeitet und die Schneide 22' anschließend gegenüber der Haupterstreckungsebene des Häckselmesser 16' nach unten abgekröpft bzw. gebogen - sh. Figuren 3b und 3c.

Aufgrund der Ausnehmungen 28, 28' ergibt sich beim Schleifen der Schneide 22, 22' keine gerade Schneidkante 30, sondern eine gewellte. Der kurvenförmige Verlauf der Schneidkante 30 führt außer in deren Mittenbereich zu einer radialen Komponente, die einen ziehenden Schnitt beim Auftreffen auf das zu häckselnde Gut bewirkt. Auf diese Weise verringern sich die Schneidkräfte und die Belastungen auf die Häckseltrommel 10.

Die Zeichnung macht auch deutlich, daß nach jedem Schleifvorgang die Schneide 22, 22' bzw. die Schneidkante 30 die gleiche Form einnimmt.

Die sich am Treffpunkt benachbarter Ausnehmungen 28, 28' ergebenden Zacken bewirken, daß das insbesondere weiche und nachgiebige Schneidgut nicht ausweichen kann.

Die Ausnehmungen 28, 28' wirken desweiteren auch als Führung für das geschnittene Gut, so daß ein Abfluß in nicht gewünschte Richtungen verhindert wird.

## Patentansprüche

1. Häckselmesser (16, 16') mit einer eine Schneide (22, 22') tragenden Vorderseite und einer Rückseite, gekennzeichnet durch Ausnehmungen (28, 28'), die nutenförmig ausgebildet und auf der Rückseite in dem Bereich der Schneide (22, 22') vorgesehen sind und sich bis zu einer Schneidkante (30) der Schneide (22, 22') erstrecken.

2. Häckselmesser nach Anspruch 1, dadurch gekennzeichnet, daß benachbarte Ausnehmungen (28, 28') aneinandergrenzen.

3. Häckselmesser nach Anspruch 1 oder 2, dadurch gekennzeichnet, daß sich die Ausnehmungen (28, 28') wenigstens über den insgesamt möglichen Nachschleifbereich des Häckselmessers (16, 16') erstrecken.

4. Häckselmesser nach einem oder mehreren der vorherigen Ansprüche, dadurch gekennzeichnet, daß die Schneide (22, 22') unter einem Winkel von 30 bis 50 Grad verläuft und die Ausnehmungen (28, 28') zwischen 5 und 20 mm breit sind.

5. Häckselmesser nach einem oder mehreren der vorherigen Ansprüche, dadurch gekennzeichnet, daß die Ausnehmungen (28, 28') im Querschnitt eine Rundung von 6 bis 14 mm Radius aufweisen.

6. Häckselmesser nach einem oder mehreren der vorherigen Ansprüche, dadurch gekennzeichnet, daß die Schneide (22, 22') gegenüber einer Haupterstreckungsebene des Häckselmessers (16, 16') abgekröpft ist.

7. Häckselmesser nach einem oder mehreren der vorherigen Ansprüche, dadurch gekennzeichnet, daß an einem der Schneide (22, 22') gegenüberliegenden Befestigungsbereich (24) Aussparungen (26) zur Aufnahme von Halteelementen (20) vorgesehen sind.

8. Häckselmesser nach einem oder mehreren der vorherigen Ansprüche, dadurch gekennzeichnet, daß sich die Ausnehmungen (28, 28') über wenigstens 3/4 der Breite der Schneide (22, 22') erstrecken.

9. Häckselmesser nach einem oder mehreren der vorherigen Ansprüche, dadurch gekennzeichnet, daß die Schneide (22, 22') in einer Schneidkante (30) ausläuft, die parallel oder geneigt zu der Drehachse einer das Häckselmesser (16) aufnehmenden Häckseltrommel (10) verläuft.
